# EUROPEAN PATENT APPLICATION

(11) **EP 2 476 613 A2**
(43) Date of publication of application: **18.07.2012**
(21) Application number: 12151009.3
(22) Date of filing: 13.01.2012
(51) Int. Cl.: B64C 13/40, B64C 9/02

(54) **Hydraulic actuator system for aircraft**

(30) Priority: 18.01.2011 JP 2011007759
(71) Applicant: Nabtesco Corporation, Tokyo 102-0093 (JP)
(72) Inventor: Suzuki, Kazuyuki, TARUI-CHO, FUWA-GUN, GIFU, 503-2124 (JP); Itoh, Koji, TARUI-CHO, FUWA-GUN, GIFU, 503-2124 (JP)
(74) Representative: Intès, Didier Gérard André

(57) **Abstract**

A hydraulic actuator system 1 is provided for driving a movable portion attached to a wing 5 of an airplane. A plurality of first system hydraulic actuators 2 and a plurality of second system hydraulic actuators 3 are included and are connected to the movable portion. The first system hydraulic actuators 2 are attached to the wing 5 and connected to a first hydraulic pressure source, whereas the second system hydraulic actuators 3 are attached to the wing to be in parallel to the first system hydraulic actuators 2 and are connected to a second hydraulic pressure source. The first system hydraulic actuators 2 and the second system hydraulic actuators 3 are alternately provided at a predetermined part of the wing 5.

## Description

### BACKGROUND OF THE INVENTION

The present invention relates to a hydraulic actuator system for driving movable portions attached to wings of an airplane.

An airplane is provided with a plurality of movable portions on wings, to change the flight attitude and the direction of flight and to change the receiving lift force. As the movable portions, for example, flaps for generating a high lift force during takeoff or landing and ailerons for rolling the airframe are provided on the main wings. An example of hydraulic actuators for driving these movable portions is recited in Patent Document 1 (Japanese Unexamined Patent Publication No. 2000-65011).

In this document, a conventional hydraulic actuator system 100 is shown in Fig. 4. As shown in Fig. 4, the hydraulic actuator system 100 includes a plurality of first system hydraulic actuators 51 (first system actuators) and a plurality of second system hydraulic actuators 52 (second system actuators) both for moving movable portions on a wing of an airplane and a LVDT 53 (movement sensor) which detects angles of the movable portions with respect to the wings or the like. The hydraulic actuators (51, 52) and the LVDT 53 are attached to a wing.

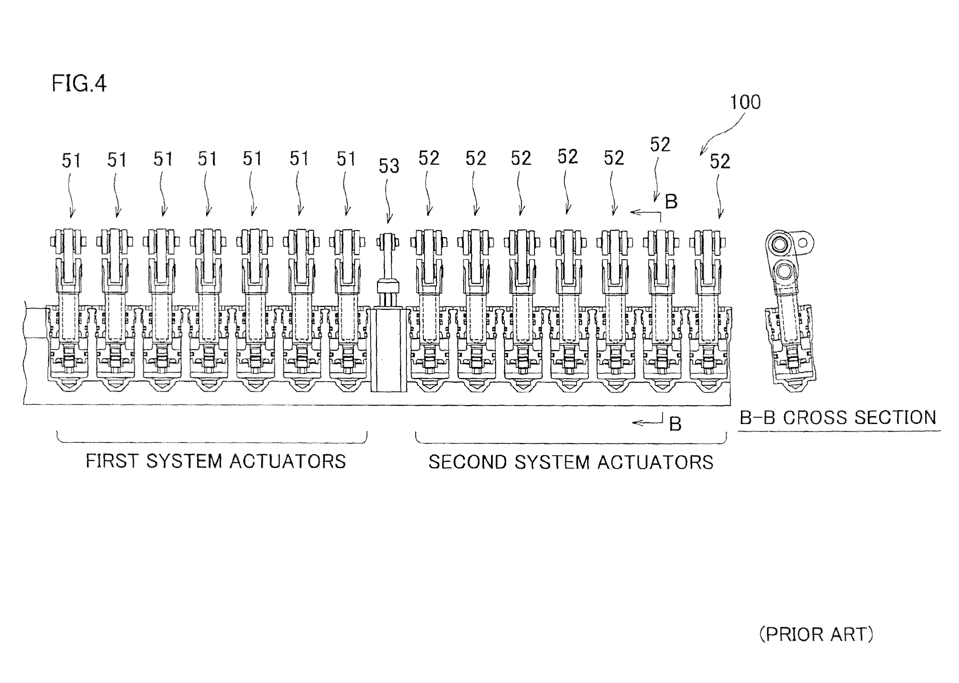

The first system hydraulic actuators 51 and the second system hydraulic actuators 52 are connected to different hydraulic pressure sources. An unillustrated controller controls the first system hydraulic actuators 51 and the second system hydraulic actuators 52, based on signals input from the LVDT 53 or the like. It is noted that more than one system of hydraulic actuators are provided because, even if one hydraulic pressure source is broken down, the movable portion can be driven by another hydraulic pressure source for another system. As shown in Fig. 4, the conventional hydraulic actuator system 100 is arranged so that the first system hydraulic actuators 51 and the second system hydraulic actuators 52 are provided to form respective groups on a wing.

Since the first system hydraulic actuators 51 and the second system hydraulic actuators 52 are connected to different hydraulic pressure sources, there is an unavoidable difference between the speed of the piston rod of each first system hydraulic actuator 51 and the speed of the piston rod of each second system hydraulic actuator 52. When the first system hydraulic actuators 51 and the second system hydraulic actuators 52 are simultaneously driven, the operations of the hydraulic actuators interfere with each other due to the difference in the speed of the piston rod. This interference is termed "Force Fight".

As described above, since the first system hydraulic actuators 51 and the second system hydraulic actuators 52 are provided as respective groups in the conventional hydraulic actuator system 100, the influences of the force fight on the wings and the movable portions are serious.

In the meanwhile, there have been demands for reducing the thickness of the wings of airplanes. When the thickness of wings of an airplane is simply reduced, the fatigue strength of the wings is deteriorated. In this regard, the deterioration of the fatigue strength of the wings is acceptable to some degree, if the influences of the force fight of the repeatedly-operating hydraulic actuators (51, 52) on the wings and the movable portions are restrained.

### SUMMARY OF THE INVENTION

The present invention was done to solve the problem above, and an object of the present invention is to provide a hydraulic actuator system which can reduce the influences of force fight of hydraulic actuators on wings and movable portions of an airplane, as compared to the conventional systems.

A hydraulic actuator system of the present invention, for driving a movable portion attached to a wing of an airplane, includes: a plurality of first hydraulic actuators and a plurality of second hydraulic actuators, which are connected to the movable portion, the first hydraulic actuators being attached to the wing and connected to a first hydraulic pressure source, the second hydraulic actuators being attached to the wing to be in parallel to the first hydraulic actuators and being connected to a second hydraulic pressure source, and the first hydraulic actuators and the second hydraulic actuators being provided in a mixed manner at a predetermined part of the wing.

According to this arrangement, since the first hydraulic actuators and the second hydraulic actuators are provided at the predetermined part of the wing of the airplane in a mixed manner, the distance between hydraulic actuators connected to different hydraulic pressure sources is short as compared to the conventional arrangements. In connection with this, the moment of a force increases in proportion to the magnitude of the force and the distance. As the distance between hydraulic actuators connected to the different hydraulic pressure sources is shortened, the moment of the force fight influencing on the wings and the movable portions is small as compared to the arrangement in which hydraulic actuators connected to a single hydraulic pressure source are provided as a group (see Fig. 4). In other words, the influences of force fight on the fatigue strength of the wings and movable portions of the airplane are restrained as compared to the conventional cases.

According to the present invention, furthermore, it is preferable that the first hydraulic actuators and the second hydraulic actuators be alternately provided.

According to this arrangement, the influences of force fight on the fatigue strength of the wings and movable portions of the airplane are further restrained.

According to the present invention, furthermore, the hydraulic actuator system is preferably arranged so that each of the first hydraulic actuators and second hydraulic actuators includes: a cylinder which is attached to the wing; a sealing component which seals an opening of the cylinder; a piston which is provided in the cylinder; a pin which is attached to the piston; and a piston rod which is provided at a hollow part of the piston and swings about the pin as the pin penetrates an end portion of the piston rod.

This arrangement allows the piston rod not only to conduct a piston action (i.e., moves forward and backward) but also to swing. It is therefore possible to reduce the number of components (links) connecting the movable portion attached to the wing with the piston rods. Reducing the number of components of the link mechanism contributes to achieve the advantage of allowing the wings of airplanes to be thin as compared to the conventional cases.

Note that a hydraulic actuator (fluid cylinder) recited in Japanese Unexamined Patent Publication No. 2000-65011 (Patent Document 1) also makes it possible to reduce the number of components (links) of the link mechanism. However, since the piston rod (rod) of this hydraulic actuator is hollow, the diameter of the rod must be relatively long. Also for this reason, the advantage of allowing the wings of airplanes to be thin is achievable when the hydraulic actuator of the present invention is used.

According to the present invention, furthermore, the hydraulic actuator system is preferably arranged so that the piston includes: a closed-bottom piston main body which is attached to the pin and has an outer circumference sliding on an inner wall of the cylinder; and a cylindrical rod housing portion which extends from the piston main body and has an outer circumference sliding on an inner wall of the sealing component, and a cylinder chamber defined by the cylinder and the sealing component is divided into two oil chambers by the piston main body and the rod housing portion.

This arrangement makes it possible to form two oil chambers between which oil leakage rarely occurs.

The present invention provides a hydraulic actuator system which can reduce the influences of force fight of hydraulic actuators on wings and movable portions of an airplane, as compared to the conventional systems.

### BRIEF DESCRIPTION OF THE DRAWINGS

Fig. 1 shows a planar configuration of a hydraulic actuator system according to an embodiment of the present invention.
Fig. 2 is a hydraulic circuit diagram of the hydraulic actuator system shown in Fig. 1.
Fig. 3 is an enlarged view of a cross section taken at the A-A line in Fig. 1.
Fig. 4 is a planar configuration of a hydraulic actuator system of the conventional technology.

### DESCRIPTION OF THE PREFERRED EMBODIMENTS

The following will describe an embodiment of the present invention with reference to figures.

An airplane is provided with a plurality of movable portions on wings to change the flight attitude and the direction of flight and to change the receiving lift force. As the movable portions, for example, flaps for generating a high lift force during takeoff or landing and ailerons for rolling the airframe are provided on the main wings. Furthermore, the airplane is provided with elevators for moving up and down the nose on horizontal tail planes and a rudder for yawing the airframe on a vertical fin. Each of these movable portions is attached to be movable in such a way that the wing incidence angle with respect to the wing is varied or the movable portion conducts translational movement with respect to the wing. With such movements, the flight attitude and the direction of flight of the airplane are changed and a high lift force is generated. A hydraulic actuator system (hydraulic actuators) of the present invention is a system (actuators) for driving these movable portions.

### (Structure of Hydraulic Actuator System)

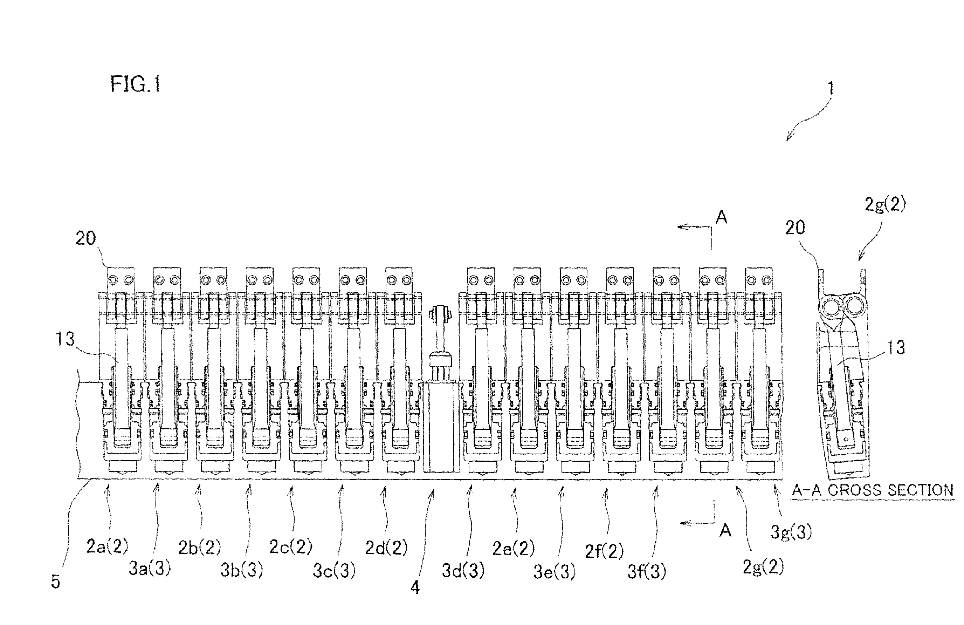

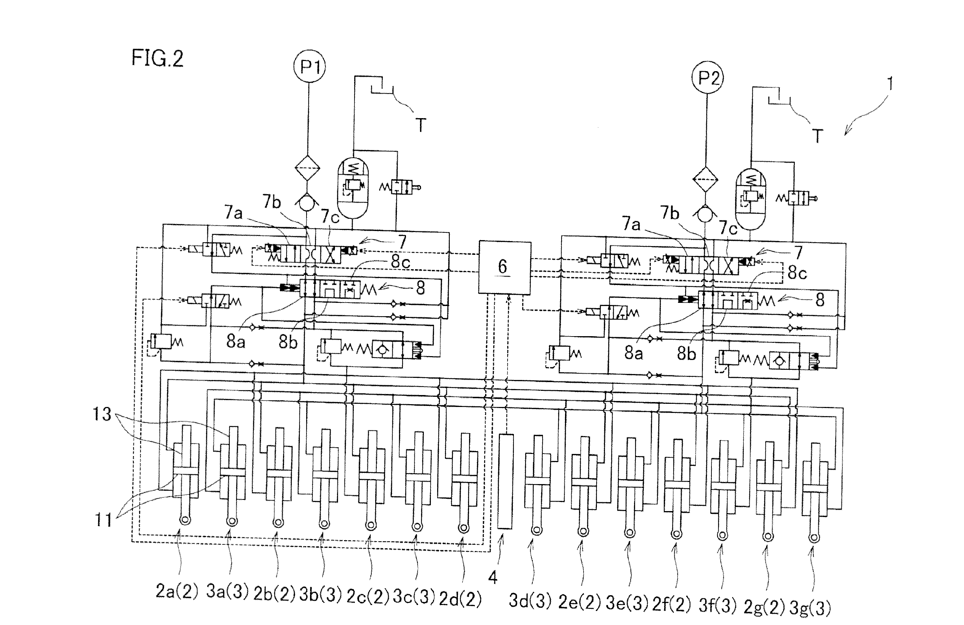

Fig. 1 is a planar configuration of a hydraulic actuator system 1 according to an embodiment of the present invention. Fig. 2 is a hydraulic circuit diagram of the hydraulic actuator system 1 of Fig. 1.

As shown in Fig. 1, the hydraulic actuator system 1 of the present embodiment includes seven first system hydraulic actuators 2 (2a to 2g), seven second system hydraulic actuators 3(3a to 3g), and a LVDT 4 (Linear Variable Differential Transformer) which is a movement sensor. As a matter of course, the number of the first system hydraulic actuators 2 (second system hydraulic actuators 3) is not limited to seven.

The seven first system hydraulic actuators 2, the seven second system hydraulic actuators 3, and the LVDT 4 are attached to an wing 5 of the airplane. To connecting members 20 respectively attached to the seven first system hydraulic actuators 2 and the second system hydraulic actuators 3, a movable portion such as an aileron is attached. By the seven first system hydraulic actuators 2 and the seven second system hydraulic actuators 3, a single movable portion (e.g., aileron) is driven. That is to say, although not illustrated, 14 hydraulic actuators (2a to 2g and 3a to 3g) in total are attached to a single movable portion (e.g., aileron). The LVDT 4 is a movement sensor for detecting the movement of a movable portion (e.g., aileron) to which the hydraulic actuators (2, 3) are attached.

In the present embodiment, the first system hydraulic actuators 2 and the second system hydraulic actuators 3 are alternately provided to be in parallel to one another. That is to say, in the present embodiment, except at the edges, each first system hydraulic actuator 2 is sandwiched by two second system hydraulic actuators 3 whereas each second system hydraulic actuator 3 is sandwiched by two first system hydraulic actuators 2. At the center of the 14 parallel hydraulic actuators (2a to 2g, 3a to 3g) is provided the LVDT 4.

In addition to the above, as shown in Fig. 2, the first system hydraulic actuators 2 (2a to 2g) are connected to a first system hydraulic pump P1 (first hydraulic pressure source) via several control valves (such as spool valves 7 and 8). Similarly, the second system hydraulic actuators 3 (3a to 3g) are connected to a second-system hydraulic pump P2 (second hydraulic pressure source) which is different from the first system hydraulic pump P1 (first hydraulic pressure source), via several control valves (such as spool valves 7 and 8). In Fig. 2, the full lines connecting the components such as the hydraulic actuators (2, 3) and the spool valves (7, 8) with one another indicate oil paths, whereas dotted lines connecting the components with one another indicate electric signal paths.

Receiving an electric signal from the LVDT 4, the controller 6 controls the valve position of the spool valve 7 among the position 7a to the position 7c, so as to control the piston rod 13 of the hydraulic actuator (2, 3). The spool valve 7 is a so-called direction switching valve. For example, a pressure oil from the first system hydraulic pump P1 is supplied to one of two oil chambers of the first system hydraulic actuator 2 (2a to 2g) via the spool valves 7 and 8. As the piston rod 13 is moved in response to the supply of the pressure oil, a pressure oil exhausted from the other oil chamber of the first system hydraulic actuator 2 (2a to 2g) returns to a tank T via the spool valves 7 and 8. (The same applies to the second system side.)

When, for example, there is a failure in the first system hydraulic pump P1, the hydraulic pressure is decreased and hence the valve position of the spool valve 8 on the first system side is switched from the position 8a to the position 8b or the position 8c. In so doing, the movement of the first system hydraulic actuator 2 (2a to 2g) follows the movement of the second system hydraulic actuator 3 (3a to 3g) which is driven by the second-system hydraulic pump P. (The same applies to the second system side.)

While Fig. 2 shows that the spool valve 7 which is connected to the first system hydraulic pump P1 and is on the first system side is different from the spool valve 7 which is connected to the second-system hydraulic pump P2 and is on the second system side, these two valves may be a single valve (spool valve). (The same applies to the spool valve 8.)

### (Structure of Hydraulic Actuator)

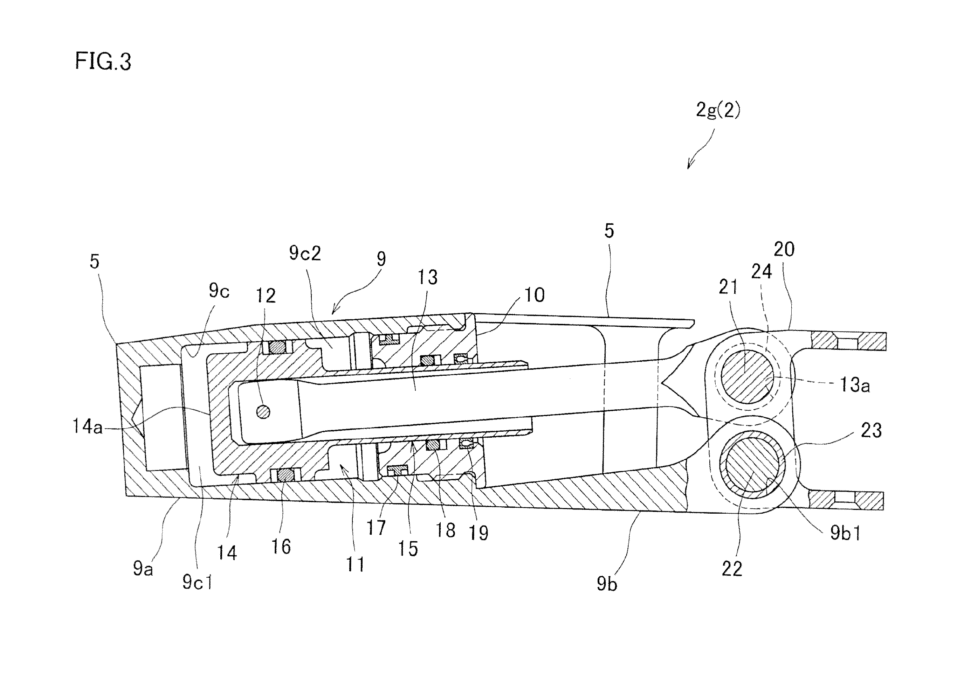

Now, referring to Fig. 3 and Fig. 1, the structure of the hydraulic actuator (2, 3) will be described. It is noted that the second system hydraulic actuator 3 and the first system hydraulic actuator 2 have the same structure.

As shown in Fig. 3, each first system hydraulic actuator 2 includes a cylinder 9, a sealing component 10 which seals the opening of the cylinder 9, a piston 11 provided in the cylinder 9, and a piston rod 13 provided in the hollow part of the piston 11.

### (Cylinder)

The cylinders 9 are attached to the wing 5. In the present embodiment, the cylinders 9 are formed at a part of the wing 5. In other words, 14 cylinders 9 are formed in the wing 5. It is noted that the cylinders 9 may not be formed in the wing 5. The cylinders 9 and the wing 5 may be different components.

The cylinder 9 includes a cylinder main body 9a housing the piston 11 therein and a movable portion connecting portion 9b extending from the cylinder main body 9a. The movable portion connecting portion 9b is arranged to be thicker in the direction away from the cylinder main body 9a, and at the leading end of the portion 9b is provided an attaching portion having a hole 9b1 to which the connecting member 20 is attached. The lower surface of the cylinder main body 9a and the lower surface of the movable portion connecting portion 9b are arranged to be flush with each other without any steps therebetween.

### (Sealing Component)

The sealing component 10 fitted to the opening of the cylinder 9 is a cylindrical component. To the outer circumference of the component a seal ring 17 is attached, whereas to the inner circumference of the component seal rings 18 and 19 are attached. The cylinder 9 and the sealing component 10 define a cylinder chamber 9c.

### (Piston)

The piston 11 linearly moves (forward and backward) along the inner wall of the cylinder 9.This piston 11 is hollow and is constituted by a closed-bottom (bottom portion 14a) piston main body 14 whose outer circumference slides on inner wall of the cylinder 9 and a cylindrical rod housing portion 15 extending from the piston main body 14. To the outer circumference of the piston main body 14 is attached the seal ring 16. Furthermore, to the piston main body 14, a pin 12 is attached to traverse the hollow portion thereof. The rod housing portion 15 is arranged so that the outer circumference thereof slides on the inner wall of the sealing component 10.

As the piston main body 14 has the bottom portion 14a (i.e., as the piston main body 14 is arranged to be closed-bottom), the piston main body 14 and the rod housing portion 15 divides the cylinder chamber 9c into two oil chambers (9c1 and 9c2). As such, because the piston main body 14 has the bottom portion 14a, two oil chambers (9c1 and 9c2) between which oil leakage rarely occurs are formed. Supplying a pressure oil from the first system hydraulic pump P1 to the two oil chambers (9c1 and 9c2) and exhausting the pressure oil therefrom, the piston rod 13 is driven with the piston 11.

### (Piston Rod)

An end portion of the piston rod 13 is penetrated by the pin 12, whereas to the other end portion of the piston rod 13 is provided an attaching portion having a hole 13a to which the connecting member 20 is attached. The piston rod 13 is solid and stick-shaped, and is arranged to swing about the pin 12. Alternatively, the pin 12 is fixed to the piston main body 14 and the piston rod 13 swings about the pin 12, or the pin 12 is fixed to the piston rod 13 and the piston rod 13 swings with the pin 12.

### (Connecting Member 20)

The connecting member 20 connects the movable portion of the wing 5 with the first system hydraulic actuator 2 (or the second system hydraulic actuator 3). To a lower hole made through the connecting member 20, a pin 22 is inserted through a bush 23. To an upper hole made through the connecting member 20, a pin 21 is inserted through a bush 24. The pin 22 and the bush 23 rotatably connects the movable portion connecting portion 9b of the cylinder 9 with the connecting member 20. The pin 21 and the bush 24 rotatably connects the piston rod 13 with the connecting member 20.

### (Operation of Hydraulic Actuator System)

The first system hydraulic actuator 2 is driven by the first system hydraulic pump P1 whereas the second system hydraulic actuator 3 is driven by the second-system hydraulic pump P2. When there is no failure in both of the first system hydraulic pump P1 and the second-system hydraulic pump P2, instead of keeping one of the hydraulic pumps idle, the hydraulic pumps of the both systems are driven and a single movable portion on the wing is moved by both of the first system hydraulic actuator 2 and the second system hydraulic actuator 3. In so doing, the first system hydraulic actuator 2 and the second system hydraulic actuator 3 are operated in the same manner based on a signal from the controller 6.

According to the present embodiment, because seven first system hydraulic actuators 2 (2a to 2g) and seven second system hydraulic actuators 3 (3a to 3g) are alternately provided at a predetermined part of the wing 5 of the airplane, the distance between hydraulic actuators (2 and 3) connected to the different hydraulic pressure sources is short as compared to the conventional system shown in Fig. 4. In connection with this, the moment of a force increases in proportion to the magnitude of the force and the distance. As the distance between hydraulic actuators (2 and 3) connected to the different hydraulic pressure sources is shortened, the moment of the force fight influencing on the wings and the movable portions is small as compared to the arrangement in which hydraulic actuators connected to a single hydraulic pressure source are provided as a group (see Fig. 4). In other words, the influences of force fight on the fatigue strength of the wings and movable portions of the airplane are restrained as compared to the conventional cases. This eventually makes it possible to reduce the thickness of wings of airplanes.

The advantage of allowing the wings of airplanes to be thin as compared to the conventional cases owes also to the structure of the hydraulic actuator (2, 3). In the hydraulic actuator (2, 3) of the present embodiment, the piston rod 13 not only conducts a piston action (i.e., moves forward and backward) with the piston 11 but also swings about the shaft of the pin 12. It is therefore possible to reduce the number of components (links) connecting the movable portion attached to the wing with the piston rods 13. In the embodiment, a component required for the connection is only the connecting member 20. Reducing the number of components of the link mechanism contributes to achieve the advantage of allowing the wings of airplanes to be thin as compared to the conventional cases.

Note that a hydraulic actuator (fluid cylinder) recited in Japanese Unexamined Patent Publication No. 2000-65011 (Patent Document 1) also makes it possible to reduce the number of components (links) of the link mechanism. However, since the piston rod (rod) of this hydraulic actuator is hollow, the diameter of the rod must be relatively long. In this regard, the piston rod 13 of the present embodiment is a sold stick-shaped component, and hence a sufficient strength is obtained with a short rod diameter. (It is possible to employ a solid stick-shaped component as the rod because the rod is swung about the pin 12.) Also for this reason, the advantage of allowing the wings of airplanes to be thin is achievable when the hydraulic actuator (2, 3) of the present embodiment is used.

It is noted that, while in the embodiment the first system hydraulic actuators 2 (2a to 2g) and the second system hydraulic actuators 3 (3a to 3g) are alternately provided at a predetermined part of the wing 5 of the airplane, two types of actuators may not be alternately provided. As shown in Fig. 4, the effect of the present invention (i.e., the reduction of the influences of force flight) is achieved by, for example, providing pairs of first system hydraulic actuators and pairs of second system hydraulic actuators alternately at a predetermined part of the wing, instead of providing a groups of all first system hydraulic actuators 51 (second system hydraulic actuators 52) together.

## Claims

1. A hydraulic actuator system (1) for driving a movable portion attached to an wing of an airplane, comprising:
a plurality of first hydraulic actuators (2) and a plurality of second hydraulic actuators (3), which are connected to the movable portion,
the first hydraulic actuators (2) being attached to the wing (5) and connected to a first hydraulic pressure source (P1),
the second hydraulic actuators (3) being attached to the wing to be in parallel to the first hydraulic actuators (2) and being connected to a second hydraulic pressure source (P2), and **characterized in that**
the first hydraulic actuators (2) and the second hydraulic actuators (3) are provided in a mixed manner at a predetermined part of the wing (5).

2. The hydraulic actuator system (1) according to claim 1, wherein,
the first hydraulic actuators (2) and the second hydraulic actuators (3) are alternately provided.

3. The hydraulic actuator system (1) according to claim 1 or 2, wherein,
each of the first hydraulic actuators (2) and second hydraulic actuators (3) includes:
a cylinder (9) which is attached to the wing (5);
a sealing component (10) which seals an opening of the cylinder (9);
a piston (11) which is provided in the cylinder (9);
a pin (12) which is attached to the piston (11); and
a piston rod (13) which is provided at a hollow part of the piston (11) and swings about the pin (12) as the pin (12) penetrates an end portion of the piston rod (13).

4. The hydraulic actuator system (1) according to claim 3, wherein,
the piston (11) includes:
a closed-bottom piston main body (14) which is attached to the pin (12) and has an outer circumference sliding on an inner wall of the cylinder (9); and
a cylindrical rod housing portion (15) which extends from the piston main body (14) and has an outer circumference sliding on an inner wall of the sealing component (10), and
a cylinder chamber (9c) defined by the cylinder (9) and the sealing component (10) is divided into two oil chambers (9c1, 9c2) by the piston main body (14) and the rod housing portion (15).
